# FASCICULE DE BREVET EUROPEEN

(11) **EP 0 364 329 B1**
(45) Date de publication et mention de la délivrance du brevet: **03.03.1993**
(21) Numéro de dépôt: 89402706.9
(22) Date de dépôt: 02.10.1989
(51) Int. Cl.: A01K 41/00, F04D 25/12

(54) **Dispositif de ventilation destiné à des incubateurs**
Belüftungsvorrichtung für Brutmaschinen
Ventilating device for incubators

(30) Priorité: 10.10.1988 FR 8813277
(43) Date de publication de la demande: 18.04.1990
(73) Titulaire: LA NATIONALE S.A., OUZOUER SUR TREZE BRIARE (Loiret) (FR); Gourdon, Jean, Saint Herblain (Loire Atlantique) (FR)
(72) Inventeur: Gourdon, Jean, Saint Herblain (Loire Atlantique) (FR); Adam, Philippe, Briar (Loiret) (FR)
(74) Mandataire: Cabinet HERRBURGER

(56) Documents cités:
- FR-A- 1 545 536
- FR-A- 2 144 285
- US-A- 1 721 249
- US-A- 2 213 873

## Description

La présente invention concerne un dispositif de ventilation destiné à des incubateurs et éclosoirs, c'est-à-dire des couveuses artificielles de petite, moyenne et grande dimension destinées à contenir des grandes quantités d'oeufs, généralement de l'ordre de 100 à 200 000 oeufs, et à l'intérieur desquelles sont maintenues des conditions de température et d'humidité les plus homogènes possibles.

Depuis les cinquante dernières années, l'aviculture utilitaire, c'est-à-dire l'élevage des gallinacés (poules, pintades, dindes, cailles, faisans, perdrix ...) mais aussi de colombidés tels que des pigeons et de palmipèdes, notamment de canards et d'oies, a connu un développement très rapide et une industrialisation qui a apporté de nombreuses modifications à l'organisation des productions. En conséquence, l'aviculture traditionnelle ou aviculture fermière est le plus souvent remplacée par une aviculture rationnelle qui se distingue avant tout par sa concentration, sa mécanisation et sa spécialisation.

Ainsi, la profession avicole comprend maintenant plusieurs branches indépendantes parmi lesquelles on peut noter les accouveurs qui, par le moyen de l'incubation artificielle dans des incubateurs du type susmentionné, transforment en poussins les oeufs à couver provenant des élevages de sélection et de multiplication.

De manière classique, ces incubateurs sont constitués par des enceintes dans lesquelles les oeufs sont disposés sur des clayettes, elles-mêmes disposées sur des chariots. Dans le cas des poules, l'incubation dure 21 jours.

Les principaux problèmes rencontrés par les accouveurs sont liés à la nécessité d'obtenir, dans les incubateurs, une température la plus uniforme possible ; cette température est, en effet, relativement difficile à maintenir étant donné qu'en début d'incubation, il est nécessaire de prévoir un chauffage, alors qu'au bout de quelques jours chaque oeuf dégage une énergie de l'ordre de 1/10 de watt, ce qui oblige à prévoir un refroidissement.

Un autre problème auquel se heurtent les accouveurs est est lié à la nécessité de maintenir à la partie interne des incubateurs une température qui soit aussi uniforme que possible, afin d'éviter tout décalage dans le temps de l'instant d'éclosion des poussins ; on a en effet pu constater qu'une différence de température de 1/10 de degré entre deux points d'un incubateur entraîne au bout de 21 jours, un décalage de l'ordre de 6 heures de l'éclosion des poussins.

Pour remédier aux problèmes susmentionnés, il est nécessaire de munir la partie interne de l'incubateur, d'un système de ventilation.

Les systèmes de ventilation classiquement utilisé sont constitués par de grandes hélices montées à la partie médiane de l'incubateur et tournant à une vitesse différente selon les modèles : ce mouvement peut être soit imprimé directement à l'arbre de l'hélice, soit être transmis par l'intermédiaire de courroies crantées ou de poulies ; dans tous les cas, ces dispositifs correspondent à des agitateurs d'air qui sont centrifuges en bout de pales, c'est-à-dire situées à la périphérie de l'incubateur pour le ramener dans la zone centrale.

Avec de tels dispositifs, l'air est en outre moins remué au centre de l'incubateur qu'à sa périphérie et, il en résulte que la partie centrale est nettement plus chaude.

Pour résoudre ce problème et trouver un système de ventilation permettant d'obtenir un brassage soutenu au centre de l'incubateur qu'à sa périphérie, on a tenté d'agir sur la forme des pales, mais, on n'a pas pu ainsi obtenir de résultats satisfaisants compte tenu du fait que la vitesse linéaire du dispositif est toujours plus élevée en bout de pales et que l'air revient toujours vers le centre, d'où il résulte un point chaud dans la partie centrale de l'incubateur.

La présente invention a pour objet de remédier aux inconvénients susmentionnés en proposant un dispositif de ventilation de nature à créer un brassage uniforme de l'air sur la totalité du volume de l'incubateur et, par suite, d'éliminer toute différence de température à l'intérieur de ce volume.

Ce dispositif qui comprend un support est centrifuge et comporte un arbre principal muni de pales susceptible de se déplacer, par rotation autour de lui-même, caractérisé en ce que l'arbre est supporté pour rotation autour de son centre dans un plan comportant l'axe dudit arbre. FR-A-2 144 285 révèle un dispositif de ventilation avec les caractéristiques du préambule de la revendication 1.

Ce double mouvement de l'arbre et des pales permet de ventiler en permanence la partie centrale de l'incubateur étant donné que l'air ne peut pas revenir au centre.

Suivant une autre caractéristique de l'invention, le dispositif comporte une couronne circulaire coopérant avec une poulie motrice dont la rotation est commandée par un moteur et portant deux bagues diamétralement opposées munies de roulements, notamment de roulements à billes et faisant office de palier pour l'arbre principal.

La double mouvement susmentionné correspond donc, d'une part, à la rotation de l'arbre principal dans ses paliers et, d'autre part, à la rotation de la couronne circulaire.

Suivant une autre caractéristique de l'invention, le dispositif comporte un support plan muni, en sa partie centrale, d'un orifice circulaire dont la périphérie fait office, sur l'une de ses faces ou première face, de chemin de roulement pour un galet monté à l'une des extrémités de l'arbre principal.

Par suite de cette configuration, la rotation de la couronne circulaire entraîne automatiquement la rotation autour de son axe de l'arbre principal, ce qui signifie que le double mouvement susmentionné est commandé par un même moteur.

Suivant une autre caractéristique de l'invention, la poulie motrice coopère avec des poulies annexes montées folles pour guider et maintenir la couronne circulaire sur la seconde face du support opposée à la première, parallèlement à celle-ci.

Suivant une autre caractéristique de l'invention, le diamètre de la couronne circulaire correspond approximativement à celui de l'orifice du support plan.

Bien entendu, ces deux éléments doivent être montés concentriques.

Suivant une autre caractéristique de l'invention, il est prévu une vis de réglage de la force d'application du galet sur son chemin de roulement.

Bien qu'il ne s'agisse pas là d'une caractéristique limitative de l'invention, les incubateurs sont le plus souvent en forme de cubes ; dans ce cas, il est particulièrement avantageux de prévoir un support de forme carrée de même dimension que les côtés de l'incubateur et de monter ce support verticalement selon l'un des plans médians de l'incubateur.

De plus, pour obtenir une ventilation optimale, il est nécessaire que les pales soient aussi longues que possible, et donc, par suite que le diamètre de l'orifice du support plan soit maximum.

Les caractéristiques du dispositif de ventilation destiné à des incubateurs qui fait l'objet de l'invention seront décrites plus en détail conformément aux dessins annexés dans lesquels :
- la figure 1 est un schéma représentant le ventilateur mis en place dans un incubateur cubique,
- les figures 2 et 3 représentent, respectivement, les première et seconde faces du support.

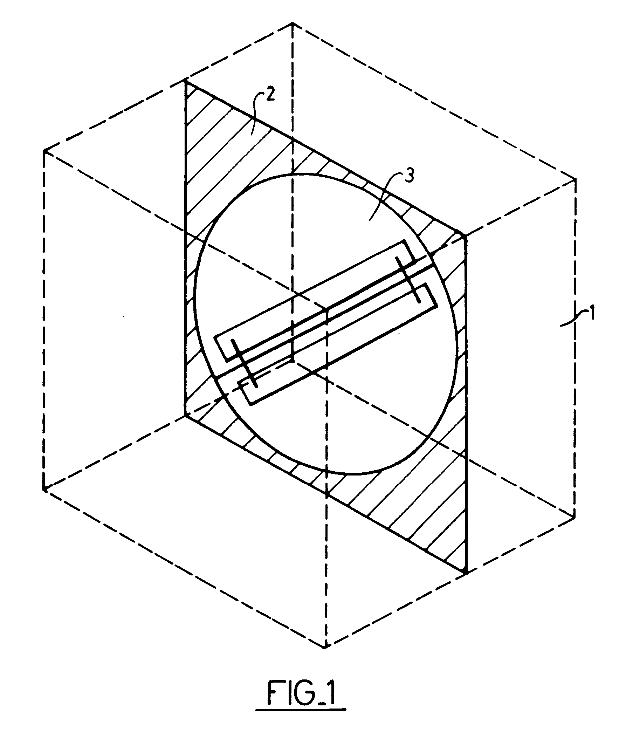

Selon la figure 1, un incubateur cubique 1 représenté en pointillés est muni, en sa partie médiane, d'un support plan 2 portant des éléments de ventilation qui seront décrits plus en détail dans la suite de cet exposé.

L'incubateur 1 est destiné à recevoir des oeufs disposés sur des clayettes non représentées.

Le support 2 est disposé verticalement et a une forme carrée dont les dimensions correspondent à celles d'un côté du cube 1.

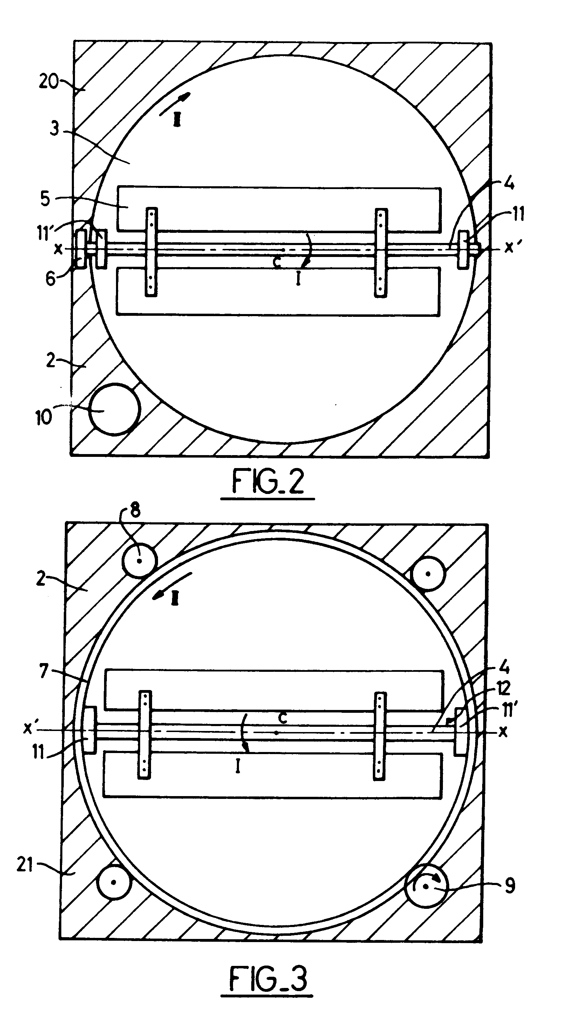

Selon les figures 2 et 3, le support 2, représenté en hachurés, est muni à sa partie centrale d'un orifice circulaire 3 de grand diamètre ; ce dernier est en fait choisi de manière à être maximum tout en conférant une rigidité suffisante au niveau des bords du support.

Selon la figure 2, un arbre principal 4 portant des pales 5 est monté sur le support 2, le long d'un diamètre x-x′ de l'orifice 3 d'une façon qui sera décrite plus en détail ci-dessous. Dans un but de simplification, les figures représentent le cas particulier d'un arbre principal 4 muni de deux, trois ou quatre pales 5 ; ce nombre n'est, bien entendu, nullement limitatif de l'invention.

L'arbre principal 4 est susceptible de se déplacer simultanément selon deux mouvements de rotation différents ; le premier de ces mouvements correspond à une rotation sur lui-même autour de son axe x-x′ selon la flèche I, tandis que le second de ces mouvements correspond à une rotation selon la flèche II autour de son centre C qui correspond au centre de l'orifice 3 dans un plan coïncidant avec celui du support 2.

Selon la figure 2, l'arbre principal 4 porte à l'une de ses extrémités un galet 6 susceptible de rouler sur une première face 20 du support 2, à la périphérie de l'orifice 3 ; ce mouvement entraîne la rotation sur lui-même de l'arbre principal 4 autour de son axe x-x′.

Selon la figure 3, une couronne circulaire 7 dont le diamètre correspond approximativement à celui de l'orifice 3 du support 2 et qui coïncide avec cet orifice est montée sur la seconde face 21 du support 2, en étant maintenue, d'une part, par trois poulies annexes 8 montées folles sur le support 2, et d'autre part, par une poulie motrice 9 entraînée en rotation par un moteur 10 représenté sur la figure 2. Il est clair que la rotation selon la flèche III de la poulie motrice 9 entraîne la rotation selon la flèche II de la couronne circulaire 7.

Par ailleurs, selon la figure 3, la couronne circulaire 7 est solidaire de deux bagues à roulements diamétralement opposée 11, 11′ qui font office de paliers pour l'arbre principal 4, qui se trouve également entraîné automatiquement selon la flèche II par suite du mouvement de la couronne circulaire 7. Il est ainsi clair que le seul moteur 10 permet de commander la rotation du système de ventilation selon les mouvements I et II.

Comme représenté schématiquement sur la figure 3, une vis 12 permet en outre de régler la force d'application du galet 6 sur son chemin de roulement qui est constitué par la périphérie de l'orifice 3 sur la première face 20 du support 2.

Comme il a déjà été indiqué ci-dessus, ce double mouvement du système de ventilation permet d'obtenir une ventilation uniforme de l'ensemble de l'incubateur 1 étant donné que l'air, ventilé en permanence, ne peut pas venir en sa partie centrale.

## Revendications

1. Dispositif de ventilation destiné à des incubateurs et éclosoirs, comprenant un support (2) lequel dispositif est centrifuge et comporte un arbre principal (4) muni de pales (5) susceptible de se déplacer, par rotation autour de lui-même, caractérisé en ce que l'arbre est supporté pour rotation autour de son centre (C) dans un plan comportant l'axe dudit arbre.

2. Dispositif selon la revendication 1, caractérisé en ce qu'il comporte une couronne circulaire (7) coopérant avec une poulie motrice (9) dont la rotation est commandée par un moteur (10) et portant deux bagues (11, 111′) diamétralement opposées munies de roulement, notamment de roulement à billes et faisant office de palier pour l'arbre principal (4).

3. Dispositif selon l'une quelconque des revendications 1 et 2, caractérisé en ce qu'il comporte un support plan (2) muni, en sa partie centrale, d'un orifice circulaire (3) dont la périphérie fait office, sur l'une de ses faces (20) ou première face, de chemin de roulement pour un galet (6) monté à lune des extrémités de l'arbre principal (4).

4. Dispositif selon l'une quelconque des revendications à à 3, caractérisé en ce que la poulie motrice (9) coopère avec des poulies annexes (8) montées folles pour guider et maintenir la couronne circulaire (7) sur la seconde face (21) du support (2) opposée à la première (20), parallèlement à celle-ci.

5. Dispositif selon l'une quelconque des revendications 1 à 4, caractérisé en ce que le diamètre de la couronne circulaire (7) correspond approximativement à celui de l'orifice (3) du support plan (2).

6. Dispositif selon l'une quelconque des revendications 1 à 5, caractérisé en ce qu'il comporte une vis de réglage (12) de la force d'application du galet (6) sur son chemin de roulement.

7. Dispositif selon l'une quelconque des revendications 1 à 6, caractérisé en ce que le support (2) est disposé verticalement à la partie médiane de l'incubateur (1).

8. Dispositif selon l'une quelconque des revendications 1 à 7, caractérisé en ce que le support (2) a une forme qui coopère avec celle de l'incubateur (1).

9. Dispositif selon la revendication 8, caractérisé en ce que le support (2) est de même dimension que les côtés de l'incubateur (1).

10. Dispositif selon la revendication 9, caractérisé en ce que le diamètre de l'orifice (3) du support plan (2) est maximum.

## Claims

1. Ventilation device for incubators and hatchers, comprising a support (2), which device is centrifugal, and comprises a principal shaft (4) provided with blades (5) which are capable of displacement by rotation about it, characterised in that the shaft is supported for rotation about its centre (C) in a plane comprising the axis of the said shaft.

2. Device according to Claim 1,
characterised in that it comprises a circular ring (7) cooperating with a driving wheel (9), the rotation of which is generated by a motor (10) and which supports two diametrally opposed hoops (11, 11′) provided with a bearing, in particular a ball-bering, and acting as a bearing for the principal shaft (4).

3. Device according to any one of Claims 1 and 2, characterised in that it comprises a flat support (2) provided, in its central part, with a circular aperture (3), the periphery of which acts, on one of its surfaces (20) or its first surface, as a path of travel for a roller (6) mounted on one of the ends of the principal shaft (4).

4. Device according to any one of Claims 1 to 3, characterised in that the driving wheel (9) cooperates with auxiliary wheels (8) mounted idling to guide and retain the circular ring (7) on the second surface (21) of the support (2) opposite the first surface (20), parallel thereto.

5. Device according to any one of Claims 1 to 4, characterised in that the diameter of the circular ring (7) corresponds approximately to that of the aperture (3) of the flat support (2).

6. Device according to any one of Claims 1 to 5 characterised in that it comprises a screw (12) for adjusting the force of the application of the bearing (6) on its path of travel.

7. Device according to any one of Claims 1 to 6, characterised in that the support (2) is disposed vertically in the median part of the incubator (1).

8. Device according to any one of Claims 1 to 7, characterised in that the support (2) is of a shape which cooperates to that of the incubator (1).

9. Device according to Claim 8,
characterised in that the support (2) is of the same measurements as the edges of the incubator (1).

10. Device according to Claims 9,
characterised in that the diameter of the aperture (3) of the flat support (2) is the maximum possible.

## Patentansprüche

1. Lüftungsvorrichtung für Brüter und Schlupfbrüter, nach dem Zentrifugalprinzip, mit einer Halterung (2) und einer Hauptwelle (4), die ihrerseits mit Schauflen (5) ausgerüstet ist, welche sich durch Drehung um diese Achse bewegen können,
**dadurch gekennzeichnet,**
daß diese Hauptwelle um ihren Mittelpunkt (C) in derjenigen Ebene drehbar gelagert ist, welche die Achse der Hauptwelle enthält.

2. Vorrichtung nach Anspruch 1,
**dadurch gekennzeichnet,**
daß sie einen Drehkranz (7) enthält, der mit einer Antriebsrolle (9) in Eingriff steht, die ihrerseits durch Motor (10) angetrieben wird, wobei der Drebkranz zwei diametral gegenüberliegende und mit Wälzlagern, insbesondere mit Kugellagern, ausgerüstete Ringe (11, 11′) enthält, dia als Drehlager für die hauptelle (4) dienen.

3. Vorrichtung nach Ansprüche 1 oder 2,
**dadurch gekennzeichnet,**
daß sie eine ebene Halterung (2) enthält, die ihrerseits in ihrem mittleren Teil mit einer kreisförmigen Öffnung (3) versehen ist, deren Umfang auf einer der Seiten (20), oder ihrer ersten Seite, als Rollweg für eine Reibrolle (6) , die an einem der Enden der Hauptwelle (4) angebracht ist, dient.

4. Vorrichtung nach Ansprüche 1 bis 3,
**dadurch gekennzeichnet,**
daß die Antriebsrolle (9) mit zusätzlichen freilaufenden Rollen (8) zusammenarbeitet, mittels derer der Drehkranz (7) auf der zweiten Seiten (21) von der Halterung (2), parallel und gegenüber zur ersten Seite (20), geführt und gehalten wird.

5. Vorrichtung nach Ansprüche 1 bis 4,
**dadurch gekennzeichnet,**
daß der Durchmesser von dem Drehkranz (7) ungefähr dem Durchmesser der Öffnung (3) in der ebenen Halterung (2) entspricht.

6. Vorrichtung nach Ansprüche 1 bis 5,
**dadurch gekennzeichnet,**
daß sie eine Einstellschraube (12) für den Anpreßdruck der Reibrolle (6) auf ihrem Rollweg enthält.

7. Vorrichtung nach Ansprüche 1 bis 6,
**dadurch gekennzeichnet,**
daß die Halterung (2) senkrecht im mittleren Teil des Brüters (1) angebracht ist.

8. Vorrichtung nach Ansprüche 1 bis 7,
**dadurch gekennzeichnet,**
daß die Halterung (2) eine Form aufweist, die mit der Form des Brüters (1) zusammenwirkt.

9. Vorrichtung nach Anspruch 8,
**dadurch gekennzeichnet,**
daß die Halterung (2) dieselben Abmessungen besitzt wie die Seitenlängen des Brüters (1).

10. Vorrichtung nach Anspruch 9,
**dadurch gekennzeichnet,**
daß der Durchmesser der kreisförmigen Öffnung (3) in der ebenen Halterung (2) größtmöglich ist.
